Europäisches Patentamt

European Patent Office

Office européen des brevets

(11) EP 1 058 099 A2

(19)

(12) **EUROPEAN PATENT APPLICATION**

(43) Date of publication:
06.12.2000 Bulletin 2000/49

(51) Int Cl.⁷: G01F 23/292

(21) Application number: 00810286.5

(22) Date of filing: 03.04.2000

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventor: **Hutchison, James S.**<br>**Indianapolis, Indiana 46219 (US)** |
| (30) Priority: **19.05.1999  US 314359** | (74) Representative: **Ganguillet, Cyril et al**<br>**ABREMA**<br>**Agence Brevets & Marques**<br>**Ganguillet & Humphrey**<br>**Avenue du Théâtre 16** |
| (71) Applicant: **UMM Electronics, Inc.**<br>**Indianapolis, Indiana 46250 (US)** | **Case postale 2065**<br>**1002 Lausanne (CH)** |

(54) **Fluid detector**

(57)    The present invention relates to a method and apparatus for measuring the presence of a fluid. One form of the present invention includes a substantially flat reflector (20) formed from a transparent material and having a flat side (26) and a ridged side (28). A beam of light shining through the flat side (26) is reflected back due to total internal reflection at the ridged surface (30) if the ridged side (28) is interfaced with a medium of substantially lower refractive index, such as air. A beam of light shining through the flat side (26) is not reflected if the ridged side (28) is interfaced with a medium of comparable refractive index, such as water. The reflector (20) may be interrogated by one or more remotely positioned optical detectors.

**Fig. 1**

## Description

## TECHNICAL FIELD OF THE INVENTION

The present invention relates generally to the field of optics, and more specifically to a two-dimensional ridged reflector for measuring the presence or absence of a fluid.

## BACKGROUND OF THE INVENTION

It is often desirable, and sometimes necessary, to be able to remotely measure the presence or quantity of a liquid in a container or conduit. For example, it is advantageous to be able to remotely gauge the level of fluid in the fuel tank of a moving vehicle, in the water tank of a humidifier, in the dosage container of an automated medical or chemical analysis apparatus, and in the quantitative measurement of very small amounts of fluid. It is also sometimes important to be able to simply detect the presence or absence of a fluid, such as water in a sealed electronics system wherein minute amounts of condensation can give rise to spurious signals, readings, and calculations

One common method of measuring the presence of a fluid is through the use of a manually read dipstick that can be manually inserted into the fluid container, removed, and read. Another common fluid measuring technique comprises the use of electronic sensors that rely on the presence of a conductive fluid to close a circuit and send a signal to a detector. Yet another common technique of fluid detection involves optical interrogation, in which a beam of light is bounced off of a reflector and back to a detector coincident with the light source. The presence of a liquid will prevent the reflector from sending the light back to the detector.

The manual inspection technique does not readily lend itself to the precise measurement of minute amounts of fluid or to the measurement of constantly changing fluid levels. Moreover, the manual inspection technique imposes detector placement restrictions on the system, insofar as the container to be measured must be readily accessible by the inspector. While the electronic detection method allows for versatility in the placement of the detector, it suffers the drawback in that it can only be used to measure the presence of electrically conductive fluids. The optical sensor may be used to measure the presence of any liquid, but in the known systems the interrogating detector is restricted to be in contact with the reflector. There remains a need for a method and apparatus for measuring the presence of a liquid in a conduit or container regardless of its conductivity and without a restriction on the placement of the detector. The present invention satisfies this need.

## SUMMARY OF THE INVENTION

The present invention relates to a method and apparatus for measuring the presence of a fluid. One form of the present invention includes a substantially flat reflector formed from a transparent material and having a flat side and a ridged side. A beam of light shining through the flat side is reflected back due to total internal reflection at the ridged surface if the ridged side is interfaced with a medium of substantially lower refractive index, such as air. A beam of light shining through the flat side is not reflected if the ridged side is interfaced with a medium of comparable refractive index, such as water. The reflector may be interrogated by one or more remotely positioned optical detectors.

One object of the present invention is to provide an improved fluid detection system. Related objects and advantages of the present invention will be apparent from the following description.

## BRIEF DESCRIPTION OF THE DRAWINGS

FIG. 1 is a perspective view of the preferred embodiment of the present invention.

FIG. 2 is a side elevational view of the embodiment of FIG. 1.

FIG. 3 is a side elevational view of a second form of the present invention.

FIG. 4 is a side elevational view of FIG. 1 showing the optical path for total internal reflection.

FIG. 5 is a side elevational view of FIG. 1 with a liquid interface showing the optical path for transmission.

FIG. 6a is a side elevational view of FIG. 1 having two alternating sets of right-angled ridges tilted with respect to each other.

FIG. 6b is a side elevational view of FIG. 6a showing the optical paths for total internal reflection.

FIG. 7a is a side elevational view of FIG. 1 having alternating sets of ridges with different ridge angles.

FIG. 7b is a side elevational view of FIG. 7a showing the optical paths for the sets of ridges.

FIG. 8a is a side elevational view of FIG. 3 having sets of ridges having peaks at a uniform elevation and bases at different levels.

FIG. 8b is a side elevational view of an alternate form of FIG. 8a, having sets of ridges with rising to different heights from a uniform base level.

FIG. 9a is a side elevational view of FIG. 1 having sets of ridges of different heights and base levels.

FIG. 9b is a side elevational view of an alternate form of FIG. 9a, having sets of ridges raised to different heights above the uniform base level.

FIG. 9c is a side elevational view of the form of FIG. 9b partially filled with an optically dense fluid and illustrating total internal reflection occurring above the fluid level and transmission occurring below the fluid level.

FIG. 10a is a perspective view of a fluid detection system having a light source, a reflector, a photodetector, and a microprocessor.

FIG. 10b is a perspective view of the reflector of FIG. 10a, illustrating the planar geometric relation of the light source and photodetector to the reflector.

FIG. 11 is a perspective view of FIG. 10 wherein the reflected beam is split and sent to two detectors.

FIG. 12 is a perspective view of FIG. 10 including a second light source/detector pair.

## DETAILED DESCRIPTION OF THE PREFERRED EMBODIMENT

For the purposes of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated device, and such further applications of the principles of the invention as illustrated therein being contemplated as would normally occur to one skilled in the art to which the invention relates.

Total internal reflection is an optical phenomenon that occurs when light rays are reflected at the boundary between two transparent media, each having a different index of refraction. Light rays passing through a first transparent medium of relatively high refractive index (optically dense) and arriving at the interface with a second transparent medium of lower refractive index (optically rarer) may be completely reflected within the optically dense medium. Total internal reflection depends on the difference between the refractive indices of the two media and the angle of incidence of the light ray at the interface. The critical angle for total internal reflection is defined as the minimum angle at which a light ray striking the surface of an optically rarer medium will be reflected instead of refracted. Although the reflection is total, the light ray actually penetrates a small distance into the rarer medium.

Total internal reflection can be mathematically expressed by Snell's Law. Snell's Law may be expressed as:

$$\sin á/\sin â = n_2/n_1$$

where $n_1$ is the index of refraction of the optically dense medium, $n_2$ is the index of refraction of the optically rare medium, á is the angle subtended by a beam of light travelling through the first optically dense medium, incident upon the interface and a line erected normal to the point of incidence, and â is the angle between the beam of light refracted into the second optically rare medium and a line erected normal to the point of entry into that medium. For the beam to be totally internally reflected into the first optically dense medium, â must be at least 90 degrees. If â = 90 degrees, the beam is reflected parallel to the interface between the two media. If â is greater than 90 degrees, the beam is totally reflected back through the first optically dense medium. The critical angle for total internal reflection, á', is thus:

$$\sin á'/\sin 90° > n_2/n_1$$

or

$$á' > \sin^{-1} n_2/n_1$$

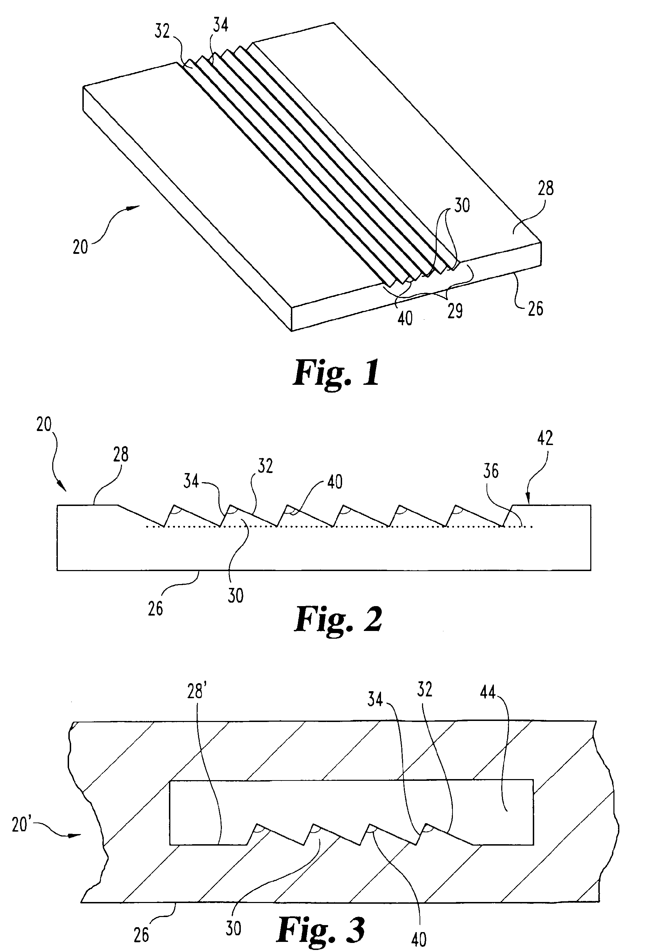

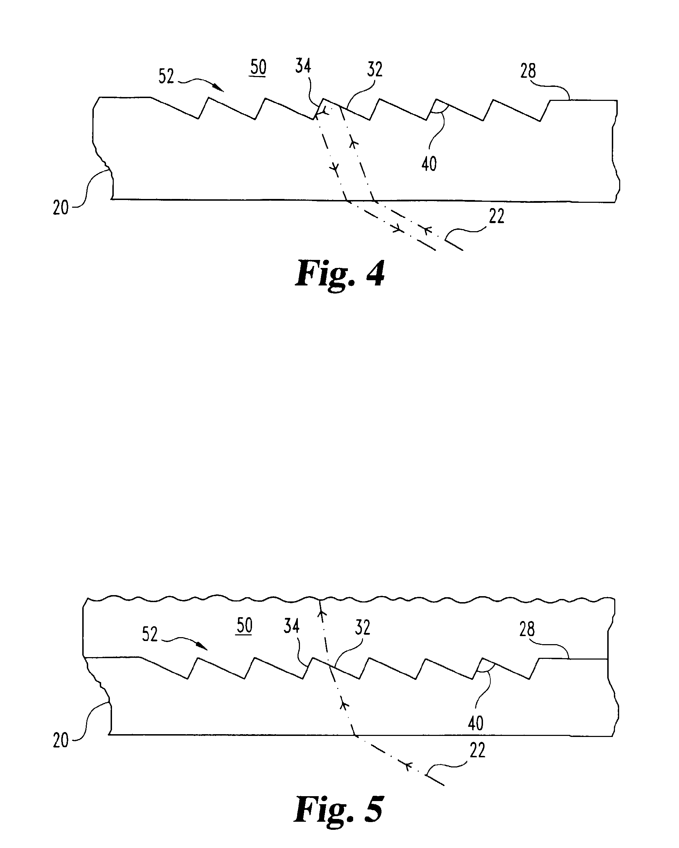

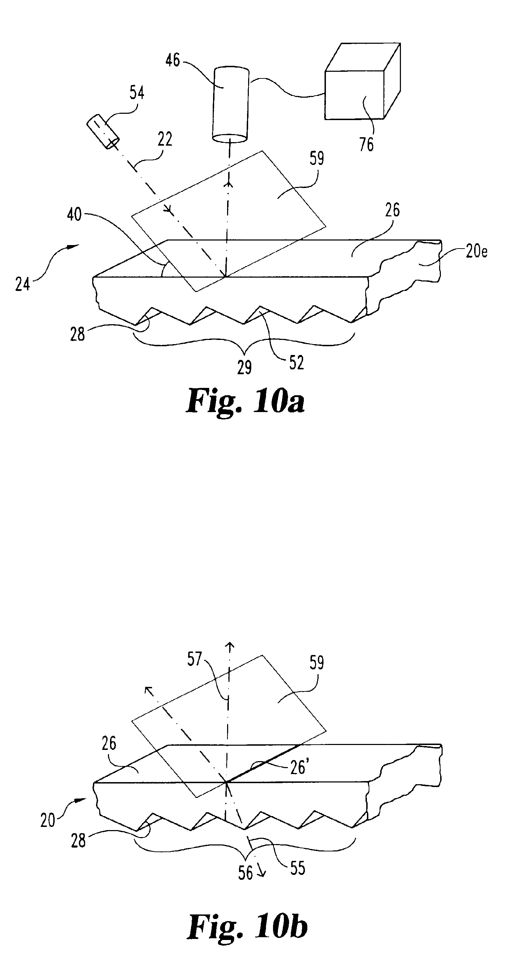

FIG. 1 illustrates one preferred embodiment of the present invention, an optical element or reflector 20 adapted to reflect a beam of light 22 (see FIG. 4) under some conditions, and to transmit beam of light 22 under other conditions. Optical element 20 is further adapted to be a component of an optical fluid level sensor system 24 (see FIGS. 10-12). Optical element 20 is preferably formed from a transparent plastic or glass having a refractive index of about 1.5. However, the refractive index of optical element 20 may be tailored to suit a given optical requirement.

Optical element 20 has a flat side 26 and an opposing ridged side 28. Optical element 20 generally has a thickness much smaller than its length or width, although it is only important that the thickness be greater than about 10 wavelengths of the light to be reflected. Optical element 20 includes at least one set 29 of ridges or elongated teeth 30. As best seen in FIG. 2, each ridge 30 has a first face 32, a second face 34, and a base 36. First face 32 and second face 34 meet at a ridge angle 40. Ridge angle 40 is preferably 90 degrees, since this results in a reflected beam of light having the same collimation as incident beam of light 22. However, ridge angle 40 may be varied to suit the particular application.

Ridged side 28 may be the outer side 42 of the element opposing the flat side 26 (FIG. 2), or may be part of an internal channel 44 formed within optical element 20' (FIG. 3). The dimensions and number of ridges 30 may vary, as long as there is enough ridge 30 area to provide a sufficiently intense reflection for a detector 46 (see FIGs. 10-12). While it is theoretically possible for a single ridge 30 to provide a reflected beam of light 22 to detector 46 for detection, practically and preferentially a set 29 of parallel ridges 30 is provided to reflect a sufficiently intense beam of light 22 to detector 46 (see FIGs. 10-12). Ridges 30 may be decreased in size to about an order of magnitude larger than the wavelength of beam of light 22.

FIGs. 2 and 3 illustrate two forms of the present invention. FIG. 2 shows reflector 20 with ridges 30 formed on the exterior surface 28, while FIG. 3 shows reflector 20' having ridges 30 formed on an interior surface 28'. The embodiment of FIG. 2 is adapted to be placed in the interior of a container capable of holding a fluid as part of an optical fluid detector system (see FIGs. 10-12), while the embodiment of FIG. 3 is adapted to hold/pass fluids therein/therethrough as both a part of a fluid conduit/container (not shown) and an optical fluid detector system (see FIGs. 10-12).

Snell's Law, as derived above, can be used to express the operation of reflectors 20 and 20' of FIGs. 2 and 3, respectively. FIGs. 4 and 5 show ridged surface 28 of reflector 20 interfaced with a transparent interfacing medium 50 having an index of refraction $n_2$. Total internal reflection occurs when a beam of light 22 incident on first face 32 at about 45 degrees to the normal is reflected onto second face 34 at about 45 degrees to the normal, and is then reflected back through reflector 20. If á is about 45 degrees, then

$$n_1 \ (\sin 45) > n_2$$

or

$$n_1 \ (0.707) > n_2$$

for total internal reflection to occur. If interfacing medium 50 is air, $n_2$ is substantially equal to 1.0, so $n_1$ must be greater than about 1.42. This relationship is true for most commonly used transparent plastics and glasses. It is important to note that for the beam to be reflected at both faces 32, 34, its angle of incidence at each face must be such that it satisfies the above relationship for total internal reflection. The geometry of the optical media 20, 50, and their physical (optical) properties are critical for total internal reflection to reliably occur.

However, if the refractive index of interfacing medium 50, $n_2$, is closer to about 1.3 (water or the like), then $n_1$ must be greater than about 1.3/0.707, or about 1.83 (for example, diamond) for total internal reflection to occur with the present geometry. Reflectors 20 having a ridged interface 52 and made of plastics or glasses having refractive indices of about 1.5 will not undergo total internal reflection if interfacing medium 50 is a liquid with a refractive index close to 1.3 or above. Ridged interface 52 provides total reflection in two dimensions over a small range of incident angles; the size of the range is determined by the ratio $n_2/n_1$.

FIG. 4 shows the path of beam of light 22 incident upon flat side 26 of optical element 20 having ridged interface 52 with an optically rare interfacing medium 50, such as air, having a refractive index close to about 1.0. Beam 22 is refracted upon entering optical element 20, reflected at first 32 and second 34 faces, and refracted again upon passing through flat side 26. Total internal reflection occurs over the range of ridge angles 40 determined by the indices of refraction of optical element 20 (usually about 1.5) and the optically rarer interfacing medium 50 (usually air or a like gas having a refractive index of about 1.0). Preferably, first face 32 is oriented perpendicular to second face 34, and incident beam 22 strikes first face 32 at an angle of about 45 degrees from the normal to reflect into second face 34 at a similar angle. In other words, reflector ridges 30 will reflect beam of light 22 while in fluidic contact with fluid 50 (such as air) having a refractive index less than the product of the refractive index of reflector 20 and the sine of the angle between beam of light 22 shining on the ridge face 32 and a line normal to ridge face 32.

FIG. 5 illustrates the transmission of beam of light 22 through the same geometry of reflector ridges 30, this time interfaced with an optically denser interfacing medium 50 such as water having a refractive index closer to that of optical element 20. Beam of light 22 is again refracted according to Snell's Law upon entering optical element 20, is transmitted through optical element 20 to interface 52, and is refracted again as it passes through interface 52 into liquid medium 50. In this case, reflector ridges 30 will not reflect beam of light 22 while in fluidic contact with a fluid 50 having a refractive index greater than the product of the refractive index of reflector 20 and the sine of the angle between beam of light 22 shining on the ridge face 32 and the normal.

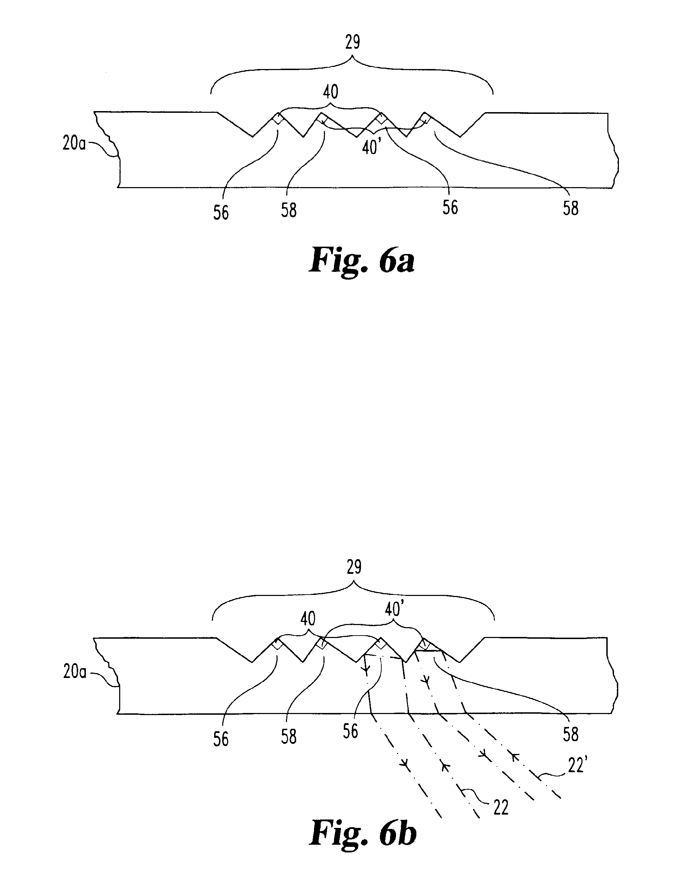

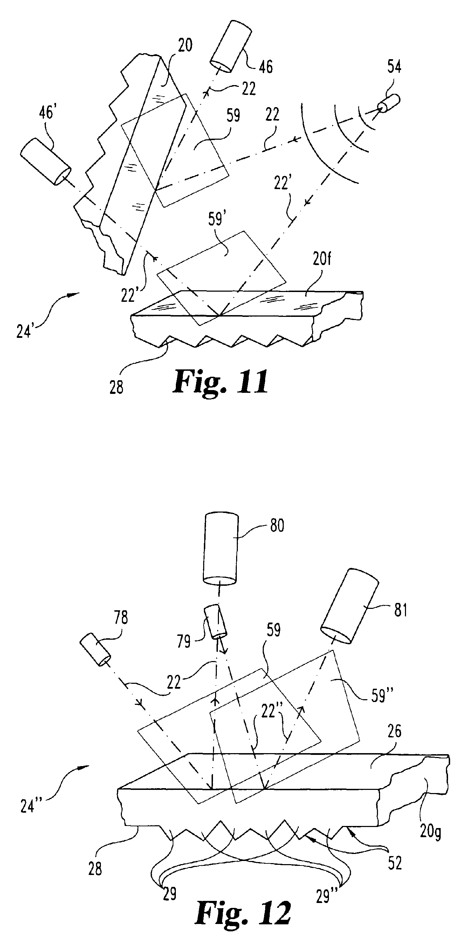

FIGS. 6a and 6b illustrate one form of optical element 20a having a first distinct set of ridges 56 and a second distinct set of ridges 58. Each set 56, 58 has a 90 degree ridge angle 40, 40', but second set 58 is tilted with respect to first set 56. Each set of ridges 56, 58 is governed by Snell's Law as set forth above, but the presence of second set 58 tilted with respect to first set 56 provides an additional set of angles through which incident beam of light 22 (see FIG. 6b) may be reflected. Optical element 20a may therefore be used to reflect two or more separate incoming beams of light 22, 22' toward two or more different detectors 46, 46' (see FIG. 12 and the discussion thereof below.)

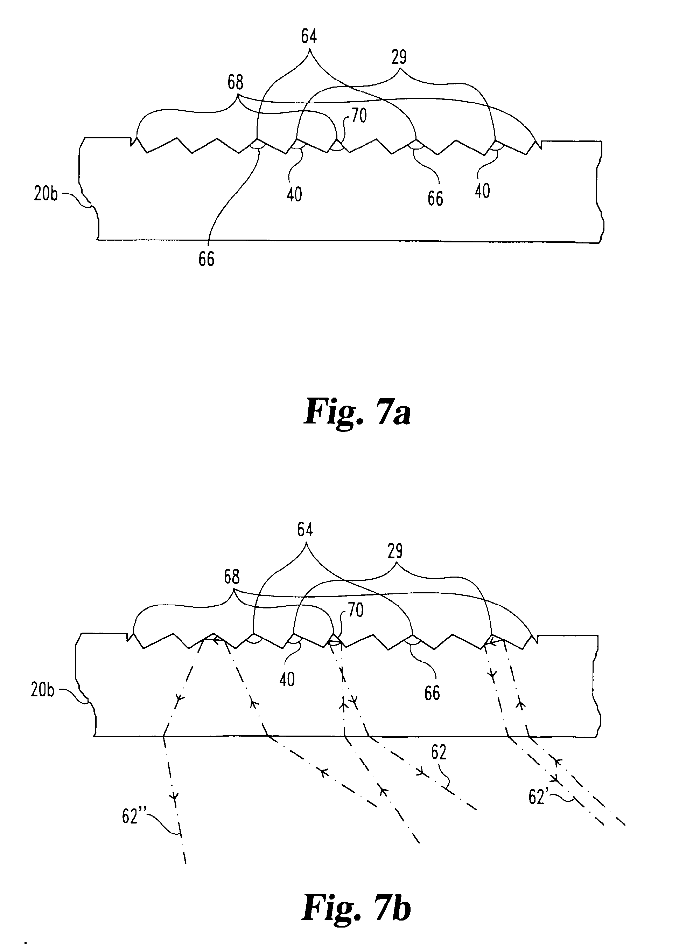

FIGS. 7a and 7b illustrate another form of optical element 20b having a number of distinct sets of ridges 68, 29, 64 showing the effects of acute, right, and obtuse ridge angles 70, 40, 66 on the respective reflected beams. While not necessarily intended as a representation of any physical reflector system, FIGs. 7a and 7b illustrate the effects of different ridge angles 70, 40, 66 on the reflected beam 22 and the focussing and/or broadening thereof. Beam of light 22 (see FIG. 7b) incident on the sets of ridges 68, 29, 64 will be split into a number of different reflected partial beams 62, 62', 62", each partial beam 62, 62', 62" corresponding to one of the sets of ridges 68, 29, 64. Each partial beam 62, 62', 62" will accordingly be reflected in a different direction. Any partial beam 62, 62', 62" reflected from a set of ridges 64 having an obtuse ridge angle 66 will be broadened, with the broadening increasing with obtuse ridge angle 66. Any partial beam 62 reflected from a set of ridges 68 having an acute ridge angle 70 will first be narrowed to a focus and then broadened.

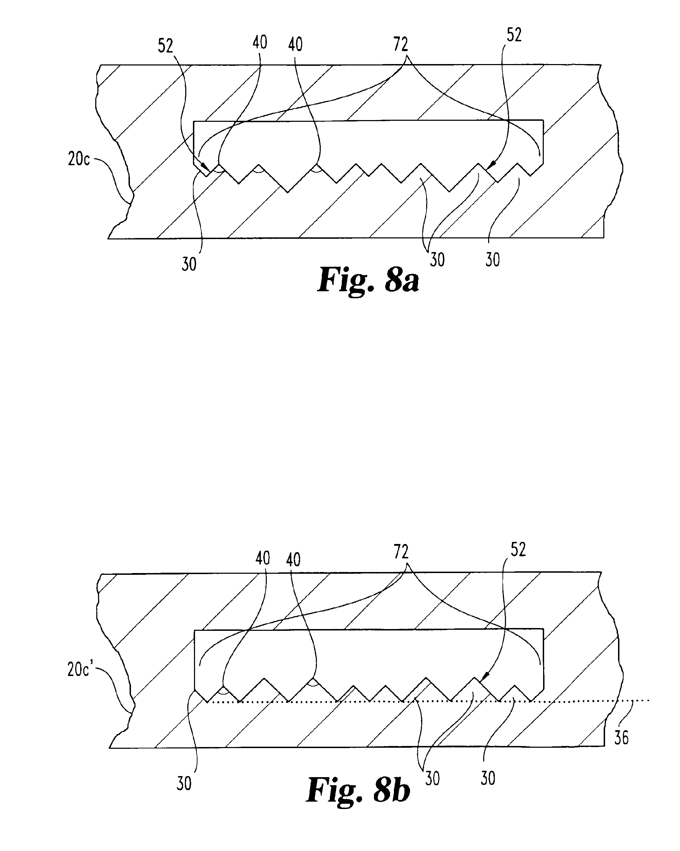

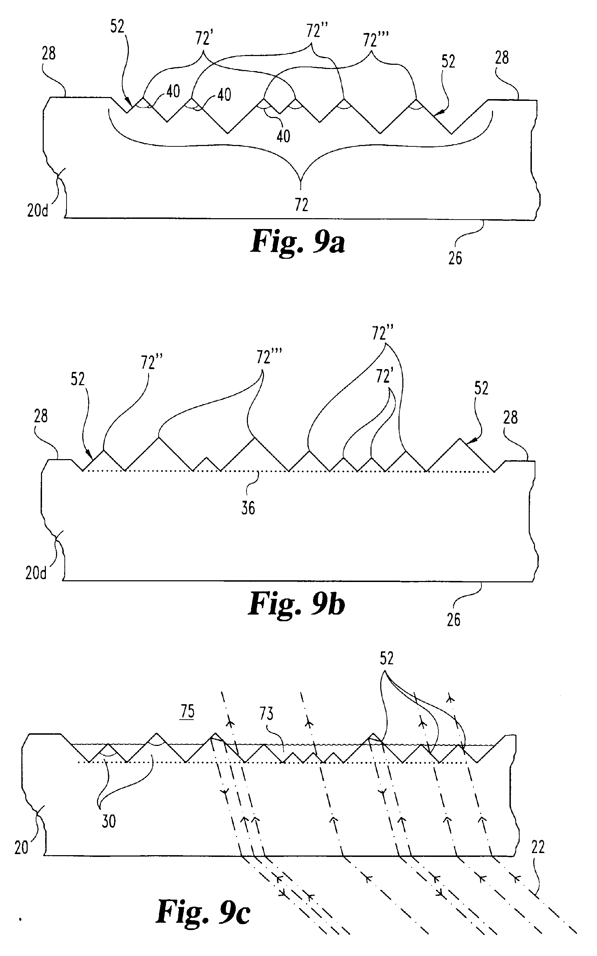

FIGs. 8a and 8b and 9a and 9b illustrate other forms of optical element 20c, 20c', 20d and 20d', respectively, each having a ridged side 28 wherein the set 72 comprises all of the ridges 30 having right ridge angles 40 and wherein subsets 72', 72'', 72''' comprise ridges 30 rising to different heights above their respective bases 36. FIGs. 8a and 8b illustrate two enclosed channel embodiments similar to the embodiment shown in FIG. 3, while FIGs. 9a and 9b illustrate two embodiments having openly exposed sets 72 of ridges 30, similar to the embodiment shown in FIG. 2. FIG. 9c is illustrative of the operation of embodiments 8a, 8b, 9a and 9b. FIG. 9c an optical element 20 having ridges 30 rising to various heights, some of which are immersed in an optically dense fluid medium 73 and some of which extend beyond the fluid medium into an optically rarer medium 75. Beams of light 22 travelling through optical element 20 into ridges 30 undergo total internal reflection at interface 52 if it comprises optically rare medium 75 but are transmitted through interface 52 if it comprises optically dense medium 73. Portions of beam of light 22 that are totally internally reflected are still reflected as a collimated beam. The intensity of the reflected beam 22 therefore diminishes as the interface is filled, until there is no reflection and the entire beam 22 is transmitted. Therefore, the intensity of the reflected beam of light can be quantitatively or semi-quantitatively correlated to the level of the fluid on the detector. Furthermore, in the embodiments illustrated in FIGs. 8a, 8b, 9a and 9b, the change in intensity is a discontinuous step function determined by the number and relative heights of the ridge sets 29. The number of different ridge sets 29 and their relative heights may be chosen to correspond with fluid levels having special significance to the system, such as a critical minimum and/or maximum fluid level, or the fluid level at which some system-specific parameter undergoes a change.

FIGs. 10-12 illustrate different configurations of a fluid detection system 24 according to the present invention. FIGs. 10-12 show the relation of light source 54 and detector 46 to reflector 20, and are not intended to illustrate the optical path of the beam of light 22 through reflector 20 as are illustrated in detail in FIGs. 4-6b. In particular, it should be noted that the refraction of beam of light 22 as it passes through flat side 26 and its path inside optical element 20 are not shown in FIGs. 10-12.

FIG. 10a illustrates light source 54 shining beam of light 22 onto the reflector 20e. Beam of light 22 is reflected at interface 52 and strikes detector 46, which is remotely positioned in plane 59 to intercept reflected beam 22. Light source 54, a segment of flat side 26 of reflector 20e, and detector 46 all lie in plane 59 and form a triangle, the apex of which is positioned substantially on segment 26'of flat side 26. The angle between light source 54 and the normal to flat side 26 is substantially equal to the angle between detector 46 and the normal to flat side 26. The angle between plane 59 and flat side 26 is substantially within the range of the angles 40 at which total internal reflection can occur, as governed by Snell's law. The reflected beam 22 is partially refocused onto detector 46, which may be connected to a microprocessor 76 adapted to process the data. In the remaining dimension, the reflection is specular. This allows for the spatial separation of a light source 54 and detector 46 pair.

As is detailed in FIG. 10b, for any set of ridges 56, tilting the corner bisector 55 away from the normal 57 to flat face 26 allows geometrical separation of signal from reflector 20 from the interfering specular reflection from the front surface. Scattering from reflector 20 is centered about the plane 59 containing a ray 55 coincident with corner bisector 55 refracted at the surface according to Snell's law ($\sin á/\sin â = n_2/n_1$) and also containing a line segment 26' on the flat surface 26 parallel to ridges 56. Plane 59 includes the specular reflection only if comer bisector 55 is nearly normal to flat face 26. In operation, each light source 54 and detector 46 pair should be positioned substantially within plane 59 (see FIG. 10a).

If reflector 20 is of the type shown in FIGs. 8 and 9, the level of a fluid may be measured by using a reflector 20 having a plurality of subsets of ridges 72', 72'', 72''' of more than one predetermined height. Reflector 20 may be positioned within a container adapted for holding a liquid (not shown) and oriented with ridges 30 extending upward from base 36. Preferably, flat side 26 is oriented parallel to the floor of the container. Light source 54 is positioned remotely from the reflector 20 and is shined thereon. If ridged interface 52 is completely covered or submerged in liquid, beam of light 22 is not reflected. If interface 52 is partially or completely free of liquid, beam 22 is at least partially reflected to a remotely positioned detector 46. The liquid level may be calculated from the intensity of reflected beam 22. A microprocessor 76 operationally coupled to detector 46 may be used to perform this calculation. A reference beam (not shown) may also be employed to aid in the calculation. Furthermore, microprocessor 76 may be used to compare the rate of change of the intensity of the reflected beam 22 to calculate the rate of change of the fluid level; the positive or negative coefficient of the rate would indicate whether the fluid level was rising or falling.

In operation, light source 54 is positioned to shine beam of light 22 through flat side 26 of reflector 20 onto ridged interface 52. Reflector 20 is positioned such that ridged side 28 is positioned within a container (not shown) capable of holding a fluid. Photodetector 46 is positioned remotely from reflector 20 such that a beam of light 22 reflected from reflector 20 will strike detector 46. Detector 46 then interrogates reflector 20 by looking for a reflection and sending a signal correlating to the presence or absence of a detected reflection. If reflector 20 is positioned at a specific level within the fluid container, associated detector 46 may be interrogated as to whether fluid has filled the container to that level by the presence or absence of a reflected signal 22. If reflector 20 has a sufficiently long ridge set 29, the decreasing intensity of the reflected beam 22 as rising fluid covers reflector 20 may provide quantitative fluid level data for detector 46.

Beam of light 22 is reflected from reflector 20 (refractive index of about 1.5) to detector 46 when ridged surface 52 is interfaced with a medium having a refractive index of about 1.0 (optically rare medium). For total internal reflection to occur with the preferred geometry (incident angle of the beam on the ridge faces of about 45 degrees), the interfaced medium 50 need only be a transparent solid, liquid, or gas having a refractive index of about 1.0. Beam of light 22 is reflected from interface 52 onto detector 46, and detector 46 then sends a signal corresponding to the detection of beam of light 22.

Beam of light 22 is completely transmitted through ridged interface 52 between reflector 20 (refractive index of about 1.5) and adjacent medium 50 if medium 50 has a refractive index of about 1.3 or greater (optically dense medium). For total transmission through interface 52 to occur with the preferred geometry (incident angle on the ridge faces of about 45 degrees), interfaced medium 50 need only be a transparent solid, liquid, or gas having a refractive index of greater than about 1.3. Beam of light 22 is reflected from interface 52 onto the detector 46, and detector 46 then sends a signal corresponding to the detection of the beam of light 22.

FIG. 11 illustrates the physical separation and relative placement of two reflectors 20, 20f illuminated by the same light source 54. For ease of illustration, FIG. 11 is drawn showing the reflectors 20, 20f positioned well apart and somewhat unrealistically oriented. FIG. 11 is intended to be illustrative of the physical optics of the system and not necessarily of a preferred orientation of reflectors 20, 20f relative to one another. FIG. 11 illustrates a fluid sensor system 24' wherein a single light source 54 illuminates two spatially separated reflectors 20, 20f, each having a different ridge orientation relative to light source 54. Each reflector 20, 20f is assigned a respective dedicated detector 46, 46', positioned in a plane 59, 59'. The reflectors 20, 20f are oriented such that light source 54 and respective detector 46, 46' are substantially within respective plane 59, 59'. This configuration allows for the use of multiply redundant remote sensors 46 in a single system 24'.

Another form of fluid detector system 24 provides a plurality of reflectors 20, each having a substantially flat side 26 and an opposing ridged side 28. Ridged side 28 has at least one set of ridges 29, but can have more. Each reflector 20 is positioned with ridged side 28 located within a container capable of holding liquid (not shown). Reflectors 20 are positioned at different elevations within the container, such that a liquid filling the container will sequentially reach reflectors 20. A light source 54 is positioned to shine on each reflector 20. One light source 54 can shine on each reflector 20 (either as a broad beam or sequentially), or, alternately, more than one light sources 54 may be assigned to shine on one or more reflectors 20. A detector 46 is positioned to receive the reflected beam of light 22 from each reflector 20. Preferentially, each reflector 20 is assigned a dedicated detector 46. However, other forms of the system can include reflectors 20 positioned to reflect beams 22 to a common detector 46. Beam of lights 22 may be sequenced such that detector 46 is interrogated by the controller 76 directing beam of lights 22 to various reflectors 20. Fluid level is measured by the interrogating reflectors 20 and calculating the fluid level from the positions of detectors 46 and their signals.

Alternately, reflectors 20 may be positioned at the same elevation, with light source or sources 54 shining simultaneously or sequentially onto reflectors 20 for reflection onto detector(s) 46. This redundant configuration is advantageous if the fluid level information is of great importance or if the system configuration makes replacement of a light source 54 and/or a detector 46 expensive or difficult.

FIG. 12 illustrates a fluid sensor system 24" having at least a first independent light source 78 and a second independent light source 79 shining beams 22, 22" onto a reflector 20g. Beam of lights 22, 22" are each reflected onto a detector, in this case onto a first independent detector 80 and a second independent detector 81, respectively. Detectors 80, 81 are positioned in planes 59, 59" to receive respective beam of lights 22, 22". Planes 59, 59" each contain a light source 78, 79, respectively, a detector 80, 81, respectively, and a segment of flat side 26 of reflector 20 wherein the angle between light source 78, 79 and a line drawn normal to flat side 26 is substantially equal to the angle between detector 80, 81 and a line drawn normal to flat side 26, respectively. Planes 59, 59" intersect flat side 26 at angles within the range at which total internal reflection may occur for each ridge set 29, 29'. Reflector 20 contains a one separate set 29 of independently oriented ridges 30 for each light source-detector pair 78/80, 79/81 in the system 24".

While the invention has been illustrated and described in detail in the drawings and foregoing description, the same is to be considered as illustrative and not restrictive in character, it being understood that only the preferred embodiments have been shown and described and that all changes and modifications that come within the spirit of the invention are desired to be protected.

## Claims

1. An optical system, comprising:

    a light source adapted to emit a beam of light;
    a detector; and
    a reflector adapted to selectively reflect the beam of light to the detector and having a flat side and a ridged side;
    wherein the flat side is substantially at the apex of a triangle formed by the light source, the flat side, and the detector;

wherein the angle between the light source and a line normal to the flat side is substantially equal to the angle between the detector and the line normal to the flat side.

2. The system of claim 1 wherein the reflector further comprises:

a ridged side having a plurality of ridges and wherein each ridge has a first face, a second face, and a base parallel to the flat side; and wherein the reflector is adapted to reflect a beam of light from the light source to the detector when the ridged side is in fluidic contact with a fluid having a refractive index substantially less than the product of the refractive index of the reflector and the sine of an angle between the beam of light shining on the first face and a line normal to the first face and wherein the reflector is adapted to not reflect a beam of light shining from the light source to the detector when the ridged side is in fluidic contact with a fluid having a refractive index greater than the product of the refractive index of the reflector and the sine of an angle between the beam of light shining on the first face and a line normal to the first face.

3. The system of claim 2 wherein the first face is oriented at a right angle to the second face.

4. The system of claim 2 wherein the index of refraction of the reflector is about 1.5.

5. The system of claim 2 further comprising a first plurality of ridges having a first angle between the first and second faces and a second plurality of ridges having a second angle between the first and second faces and wherein the first and second plurality of ridges divide the reflected beam of light into a first and a second portion and wherein the first and second plurality of ridges alternate between one another.

6. The system of claim 5 wherein at least one of the pluralities of ridges has faces oriented perpendicular to one another.

7. The system of claim 5 further comprising a third set of ridges having a third angle between the first and second faces and alternating sequentially with the first and second plurality of ridges and wherein the first, second, and third set of ridges divide the reflected beam of light into a first portion and a second portion and a third portion.

8. The system of claim 2 wherein the detector is adapted to be operationally connected to a microprocessor.

9. The system of claim 5 further comprising a second detector adapted to receive the second portion of the reflected beam of light.

10. The system of claim 7 further comprising a third detector adapted to receive the third portion of the reflected beam of light.

11. The system of claim 2 further comprising a second light source adapted to emit a second beam of light and a second detector adapted to receive a second reflected beam of light and wherein the flat side is substantially at the apex of a triangle formed by the second light source, the flat side, and the second detector and wherein the angle between the second light source and a line normal to the flat surface is substantially equal to the angle between the second detector and a line normal to the flat surface.

12. The system of claim 2 wherein the reflector further comprises:

a ridged side having a first plurality of ridges having a first angle between the first and second faces and a second plurality of ridges having a second angle between the first and second faces;
a second detector adapted to receive the second portion of the reflected beam of light; and
a second light source adapted to emit a second beam of light and a second detector adapted to receive a second reflected beam of light;
wherein the flat side is substantially at the apex of a triangle formed by the second light source, the flat side, and the second detector; and
wherein the angle between the second light source and a line normal to the flat surface is substantially equal to the angle between the second detector and a line normal to the flat surface;
wherein the first and second plurality of ridges divide the reflected beam of light into a first and a second portion;
wherein the first and second plurality of ridges alternate between one another;
wherein at least one plurality of ridges has faces oriented perpendicular to each other;
wherein the reflector is adapted to reflect a beam of light from the light source to the detector when the ridged side is in fluidic contact with air; and
wherein the reflector is adapted to not reflect a beam of light shining from the light source to the detector when the ridged side is in fluidic contact with a fluid having a refractive index greater than product of the refractive index of the reflector and the sine of an angle between the beam of light shining on the ridge face and a line normal to the ridge face;
wherein the index of refraction of the reflector is about 1.5; and
wherein the detector is adapted to be operationally connected to a microprocessor.

13. The system of claim 2 further comprising at least two sets of ridges, wherein each set of ridges rises to a different predetermined height above the base.

14. The system of claim 13 further comprising a microprocessor operationally coupled to the detector, wherein the detector is adapted to send a output signal of varying intensity corresponding to the intensity the reflected beam and wherein the microprocessor is adapted to calculate a relative fluid level from the intensity of the output signal.

15. A reflector comprising:

a substantially transparent body;
a substantially flat first side; and
a ridged second side positioned opposite the first side;
wherein each ridge has a first face, a second face, and a base parallel to the substantially flat first side; and
wherein the reflector is adapted to reflect a beam of light from the light source to the detector when the ridged side is exposed to air and wherein the reflector is adapted to not reflect a beam of light shining from the light source to the detector when the ridged side is in fluidic contact with a fluid having a refractive index greater than product of the refractive index of the reflector and the sine of an angle between the beam of light shining on the ridge face and a line normal to the ridge face.

16. The reflector of claim 15 further comprising a first plurality of ridges having a first angle between the first and second faces and a second plurality of ridges having a second angle between the first and second faces and wherein the first and second plurality of ridges divide the reflected beam of light into a first and a second portion and wherein the first and second plurality of ridges alternate between one another.

17. The reflector of claim 15 further comprising a plurality of sets of ridges each set having a characteristic angle between the first and second faces and alternating sequentially with the other sets of ridges, wherein the each of the plurality of sets of ridges divide the reflected beam of light into a different portion.

18. A method for detecting a fluid comprising the steps of:

a) providing a reflector having a substantially flat side and an oppositely located ridged side;
b) positioning the reflector such that the ridges interface with the interior of a container capable of holding a liquid;
c) positioning a light source remotely from the reflector;
d) positioning a light detector remotely from the reflector;
e) shining a beam of light from the light source through the flat side onto the ridged interface; and
f) interrogating the reflector with the detector.

19. The method of claim 18 further comprising the steps of:

interfacing the ridges with a gas;
reflecting the beam of light from the interface onto the detector; and
sending a signal corresponding to a beam of light striking the detector.

20. The method of claim 18 further comprising the steps of:

filling the liquid container sufficiently such that the ridges interface with the liquid; and
transmitting substantially the entire beam of light through the interface.

21. A method for detecting the level of a fluid comprising the steps of:

a) providing a plurality of reflectors, each having a substantially flat side and an oppositely located ridged side;
b) positioning the reflectors in a container capable of holding liquid at predetermined elevations such that the ridges interface with the interior of the container;
c) positioning a respective light source remotely from each reflector;
d) positioning a respective light detector remotely from each reflector;
e) shining a beam of light from each respective light source through each respective flat side onto each respective ridged interface;
f) interrogating each reflector with the respective detector; and
g) calculating the water level from the positions of the detectors and their signals.

**22.** A method for detecting the level of a fluid comprising the steps of:

a) providing a reflector having a substantially flat side and an oppositely located ridged side having at least two sets of ridges rising to predetermined heights;

b) positioning the reflector within a container capable of holding liquid;

c) orienting the flat side parallel to the floor of the container and orienting the reflector such that the ridges rise up from the reflector;

d) positioning a respective light source remotely from the reflector;

d) positioning a respective light detector remotely from the reflector;

e) shining a beam of light from the light source through the flat side onto the ridges;

f) interrogating the reflector with the detector; and

g) calculating the water level from intensity of the reflected beam.

**Fig. 1**

**Fig. 2**

**Fig. 3**

**Fig. 4**

**Fig. 5**

**Fig. 6a**

**Fig. 6b**

**Fig. 7a**

**Fig. 7b**

Fig. 8a

Fig. 8b

**Fig. 9a**

**Fig. 9b**

**Fig. 9c**

**Fig. 10a**

**Fig. 10b**

**Fig. 11**

**Fig. 12**